# EUROPEAN PATENT APPLICATION

(11) **EP 1 145 631 A1**
(43) Date of publication of application: **17.10.2001**
(21) Application number: 01109138.6
(22) Date of filing: 12.04.2001
(51) Int. Cl.: A01K 39/012

(54) **Automatic feeder construction for poultry**

(30) Priority: 13.04.2000 IT MI000828
(71) Applicant: Falcon S.R.L., 23883 Brivio (LECCO) (IT)
(72) Inventor: Cogliati, Arturo, 23883 Brivio (Lecco) (IT)
(74) Representative: Cicogna, Franco

(57) **Abstract**

An automatic manger construction for poultry comprises a plate coupled to a grid including a cylindric portion receiving an outlet fitting which axially slides in the cylindric portion, the outlet fitting being suitable for coupling to a feeding pipe, and being characterized in that the outlet fitting comprises openings or windows which can be closed or opened by the cylindric portion of the grid.

## Description

### BACKGROUND OF THE INVENTION

The present invention relates to an automatic manger construction for poultry.

In intensive feeding poultry such as hens, turkeys, guinea-fowls, automatic mangers are conventionally used, which substantially comprise feed supplying pipes, on which are suspended plates including adjusting devices for adjusting the level of the delivered feed.

Modern feeding methods provide to arrange the above mentioned plates, in the first poultry growing step, at the ground level, and to hold a comparatively high level of the feed material, to allow the poultry to be easily fed.

As the poultry grows, the level of the feed material in the plate is progressively lowered to prevent feed material from being wasted, since the larger animals tend to outward spread the feed.

Thus, it is necessary to periodically perform adjustment operations for adjusting the feed delivery means, to progressively reduce the supplied feed level.

Such manual adjustment operations would involve a great amount of labour, with the consequent costs associated thereto.

### SUMMARY OF THE INVENTION

Accordingly, the aim of the present invention is to provide such a manger construction which overcomes the above mentioned drawbacks of the prior art.

Within the scope of the above mentioned aim, a main object of the invention is to provide such a manger construction allowing the feed level to be automatically remotely adjusted.

Yet another object of the present invention is to provide such a manger construction which is very reliable and safe in operation.

Yet a further object of the present invention is to provide such a manger construction which can be applied to existing feed delivering systems.

According to one aspect of the present invention, the above mentioned aim and objects, as well as yet other objects, which will become more apparent hereinafter, are achieved by a manger construction for poultry comprising a plate coupled to a grid including a cylindric grid portion provided for receiving an outlet fitting which can axially slide in said cylindric grid portion and can be coupled to a feed supply pipe, characterized in that said outlet fitting comprises a plurality of openings or windows which can be either closed or opened by said grid cylindric portion.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of a merely indicative, but not limitative, example, in the accompanying drawings, where:
Figure 1 is an elevation view illustrating the manger construction according to the invention;
Figure 2 is a cross-sectioned elevation view of the manger construction, being shown in the open-window and minimum level condition thereof;
Figure 3 is a further cross-sectioned elevation view of the manger construction, being shown in the closed-window and minimum level condition thereof;
Figure 4 is a further cross-sectioned elevation view of the manger construction, being shown in the open-window and maximum level condition thereof;
Figure 5 is a further cross-sectioned elevation view of the manger construction, being shown in the closed-window and maximum level condition thereof;
Figure 6 is a side view illustrating the outlet fitting provided for sliding in a cylindric portion of the manger construction according to the invention and provided with a locking element, preventing the feed level adjusting device to be arranged at a wrong position, as the manger construction is cleaned;
Figures 7 and 8 are respective cross-sectioned side views illustrating the outlet fitting, the locking element being shown in a locking and an unlocking condition respectively;
Figure 9 is a top plan view illustrating the outlet fitting;
Figure 9a shows two side views of the above mentioned locking or detent element;
Figure 10 is a cross-sectioned side view of the manger construction according to the invention, in the embodiment thereof including the locking or detent element, and with the level adjusting device shown in an unlocking condition thereof; and
Figures 11 and 12 show two cross-sectioned side views of the manger construction including the above mentioned locking or detent element, the feed level adjusting device being shown in an end of stroke or limit locking condition thereof.

### DESCRIPTION OF THE PREFERRED EMBODIMENT

With reference to the number references of the above mentioned figures, the automatic manger construction according to the invention, which has been generally indicated by the reference number 1, comprises a plate 2, coupled to a grid 3, including a cylindric grid portion 4 provided for receiving an outlet fitting 5 which can axially slide in said cylindric grid portion 4.

As shown, the outlet fitting 5 comprises a top attachment 6 which can be coupled to a pipe 8 at a hole 9 formed through said pipe, and which can be closed by a closing cap 10.

At the bottom thereof, the outlet fitting 5 comprises a plurality of openings or window 11 and, thereunder, an enlarged bottom 12 which can be arranged at a tapering ridge 13 formed in the center of the plate 2.

The bottom 12 of the outlet fitting is engaged by a feed adjusting device 14, comprising a tapering or conic body having a cylindric portion including a plurality of different height inner slots 15 for receiving therein corresponding ribs or guides 16 formed on the outer surface of the enlarged bottom 12 of the outlet fitting 5.

In operation, by turning the feed level adjusting device and engaging different slots, it is possible to adjust the vertical position of the adjusting device with respect to the outlet fitting.

The automatic manger construction according to the present invention operates as follows.

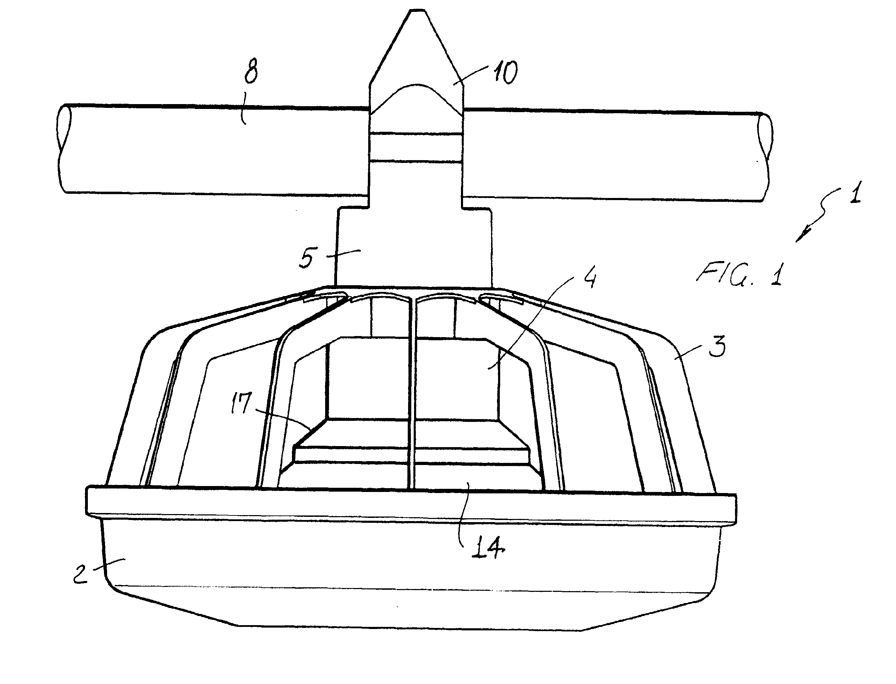

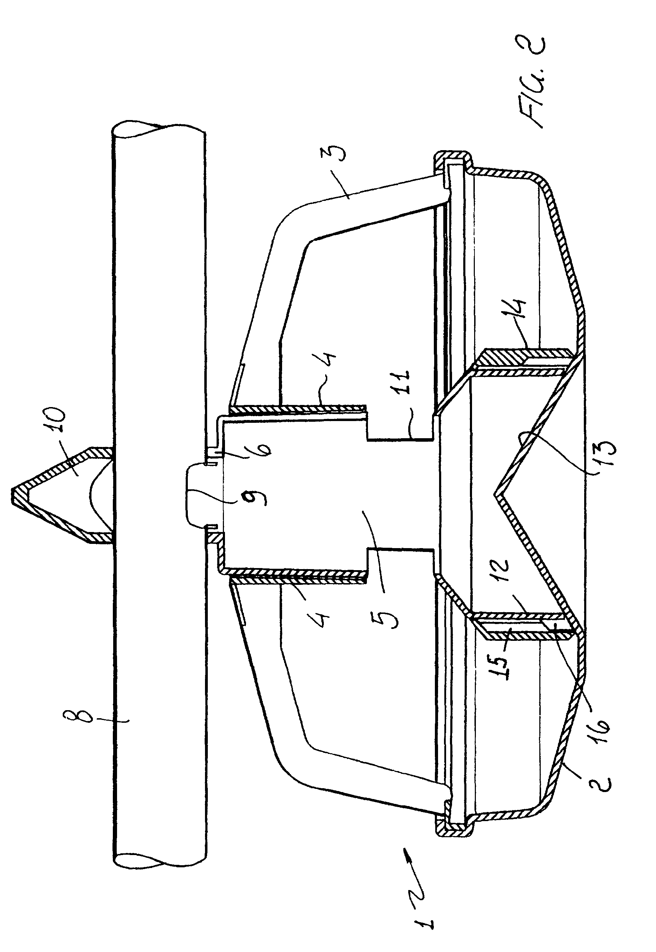

With the manger construction supported by a floor, the outlet fitting 5, rigid with the pipe 8, will slide with respect to the cylindric portion 4 of the grid 3, by bearing on the bottom of the plate 2 and opening the windows 11 of said outlet fitting, as is clearly shown in figure 2.

Simultaneously, the feed level adjusting device 14 will upward slide, with respect to the bottom 12 of the outlet fitting 5.

In this position, the feed material will exit the open windows 11.

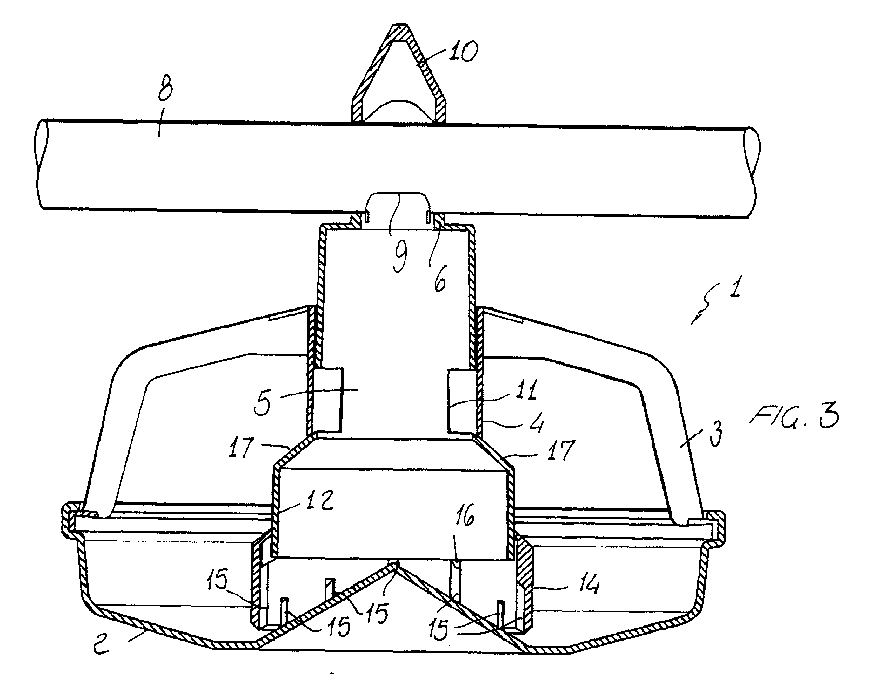

As the pipe 8 is raised (figure 3), the grid 3 and the plate 2 rigid therewith will slide along the outlet fitting 5 to cause the cylindric portion 4 of the grid 3 to abut against the tapering portion 17 forming the top portion of the enlarged bottom 12 of the outlet fitting 5, thereby closing said windows 11.

Simultaneously, the feed level adjusting device 14 will slide with respect to the outlet fitting, to cause the ribs or guides 16 to bear on the bottom of slots 15 thereby opening a bottom region for allowing the feed material to pass therethrough.

In this connection it should be apparent that the size of the open region would depend on the preselected guides, by arranging the feed adjusting device at different angular positions with respect to the outlet fitting.

In the exemplary shown embodiment, the slots 15 and corresponding guides 16 are arranged in three series or patterns.

However, it should be apparent to one skilled in the art that the number and arrangement of the slots and related guides can be changed depending on the number of different adjusting positions to be obtained.

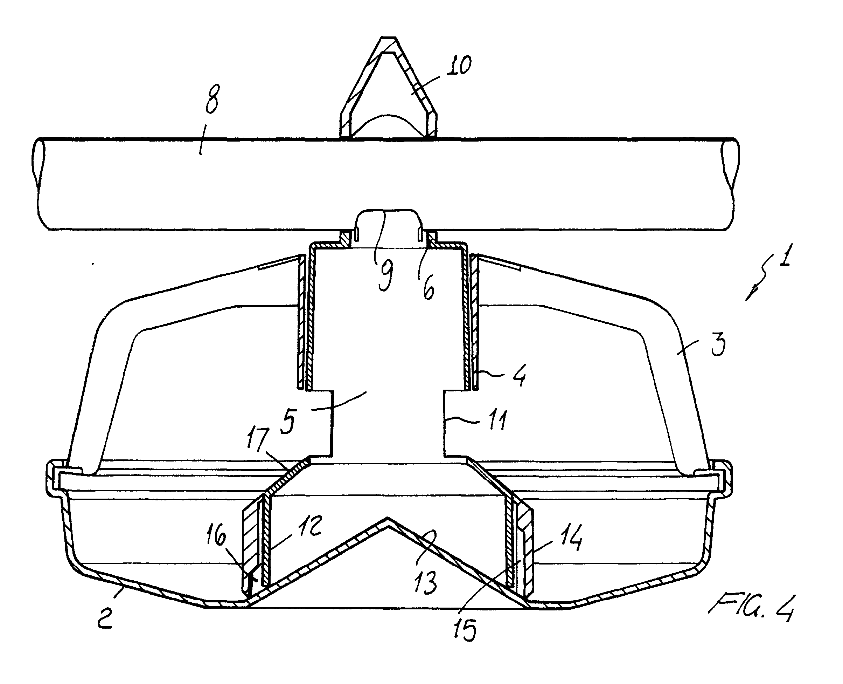

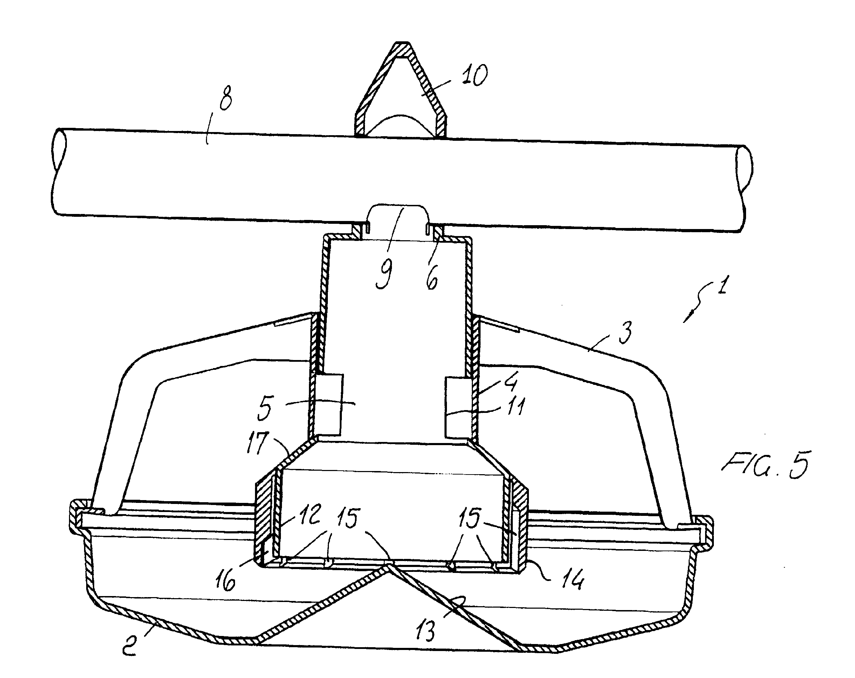

Figures 4 and 5 show respectively positions analogous to those shown in figures 2 and 3, but in which the size of the open region on the bottom of the plate are maximum, instead of minimum, as in the position which are shown in figures 2 and 3.

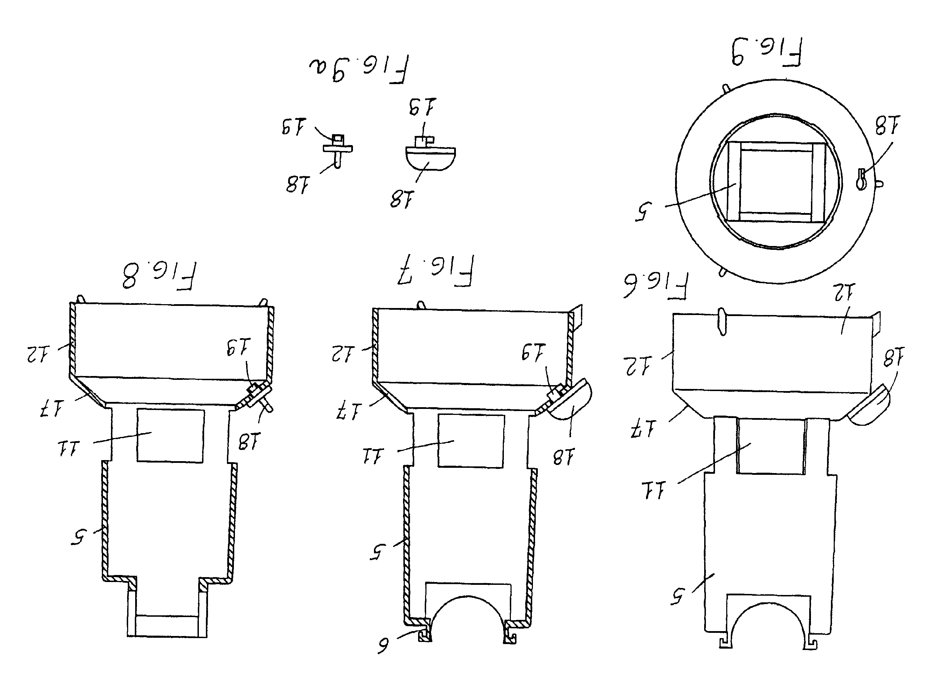

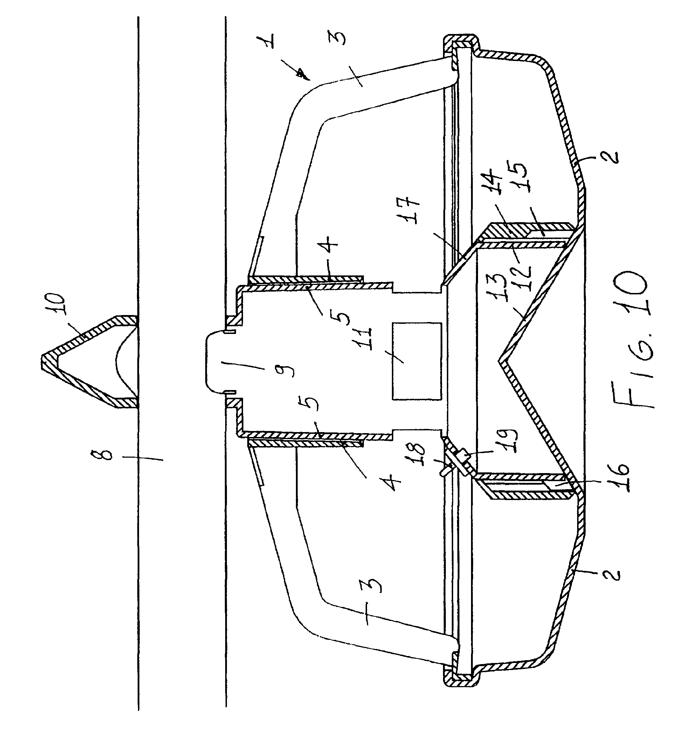

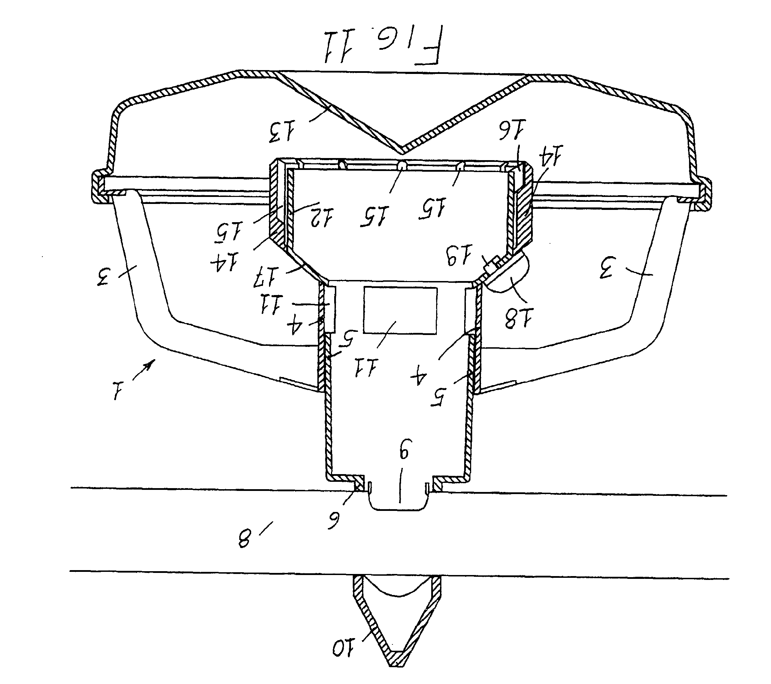

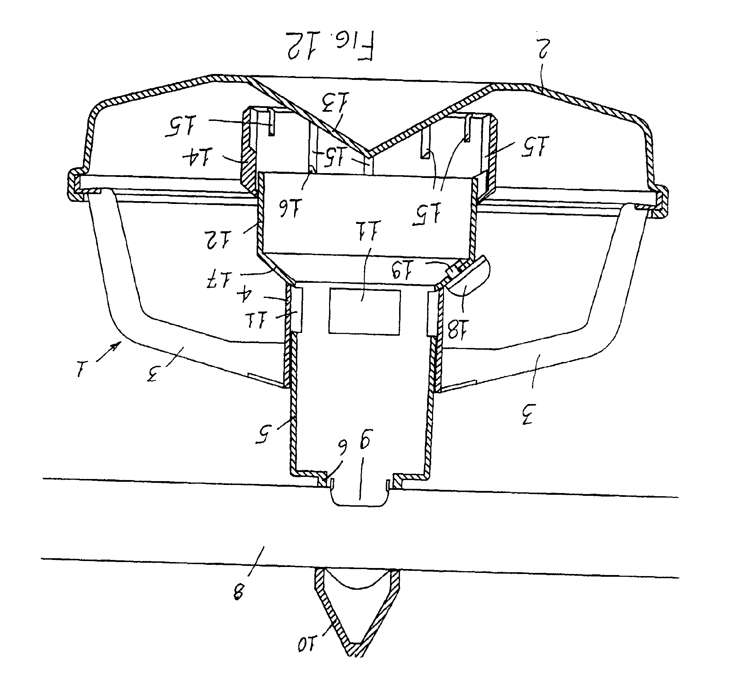

With reference to figures 6 to 12, it should be apparent that the manger construction according to the present invention comprises a locking or detent element 18 preventing the feed level adjusting device 14 from being arranged at wrong positions, as the manger construction 1 is cleaned by reversing it.

During this cleaning operation, the locking or detent element 18 being removed, the feed level adjusting device 14 would be arranged at a wrong position, thereby requiring a manual relocating operation by an operator.

In particular, as the locking or detent element 18 is turned about an anchoring pivot pin 19, it will assume an end of stroke or limit locking position, or an unlocking position.

This result is possible since the locking or detent element 18 has an elliptical configuration which, at a greater length condition thereof, and, accordingly, at a maximum projection condition thereof, will prevent the feed adjusting device from downward dropping, and assuming an inclined position, as the manger construction 1 is reversed during the cleaning operations.

It has been found that the invention fully achieves the intended aim and objects thereof.

In fact, an automatic manger construction allowing an automatic and accurate adjustment of the feed material has been provided.

In practicing the invention, the used materials, as well as the contingent size and shapes, can be any, depending on requirements and the status of the art.

## Claims

1. A manger construction for poultry comprising a plate (2) coupled to a grid (3) including a cylindric grid portion (4) provided for receiving an outlet fitting (5) which can axially slide in said cylindric grid portion (4) and can be coupled to a feed supply pipe (8), **characterized in that** said outlet fitting (5) comprises a plurality of openings or windows (11) which can be either closed or opened by said grid (3) cylindric portion (4).

2. A manger construction, according to Claim 1, **characterized in that** said grid (3) and cylindric portion (4) are made as a single piece.

3. A manger construction, according to Claim 1 or 2, **characterized in that** said manger construction comprises a feed level adjusting device (14) including a tapering body having a cylindric portion including different height inner slots (15) provided for engaging therein ribs or guides (16) formed on the outer surface of an enlarged bottom portion (12) of said outlet fitting (5).

4. A manger construction, according to one or more of the preceding claims, **characterized in that** the series number of said slots (15) is equal to the number of guides (16).

5. A manger construction, according to one or more of the preceding claims, **characterized in that** said feed level adjusting device (14) slides with respect to said outlet fitting (5) to cause said ribs or guides (16) to abut against the bottom of said slots (15), thereby leaving open a bottom region for allowing the feed material to pass therethrough.

6. A manger construction, according to one or more of the preceding claims, **characterized in that** the size of the bottom open region depend on the guides (16) being selected, by arranging said feed level adjusting device (14) at different angular position with respect to said outlet fitting (5).

7. A manger construction, according to one or more of the preceding claims, **characterized in that** with the windows (11) opened, said windows are always fully opened, independently from the adjustment of the size of the bottom open region.

8. A manger construction, according to one or more of the preceding claims, **characterized in that** said manger construction comprises a locking or detent element (18) preventing said feed level adjusting device (14) from being arranged at a wrong position as said manger construction is reversed for cleaning it.

9. A manger construction, according to one or more of the preceding claims, **characterized in that** said locking or detent element can turn about an anchoring pivot pin (19), to be arranged at an end of stroke locking position as said locking element (18) is arranged at a maximum projection condition thereof.

10. A manger construction, according to one or more of the preceding claims, **characterized in that** said locking or detent element (18) has an elliptic or eccentric configuration.
